# EUROPÄISCHE PATENTANMELDUNG

(11) **EP 2 827 313 A1**
(43) Veröffentlichungstag der Anmeldung: **21.01.2015**
(21) Anmeldenummer: 14177136.0
(22) Anmeldetag: 15.07.2014
(51) Int. Cl.: G08C 17/02

(54) **EnOcean-Sprachschalter**

(30) Priorität: 16.07.2013 DE 202013103179 U
(71) Anmelder: dihva GmbH, 53474 Bad Neuenahr (DE)
(72) Erfinder: Keuler, Franz, 53474 Bad Neuenahr-Ahnweiler (DE)
(74) Vertreter: Wolff, Felix

(57) **Zusammenfassung**

Die vorliegende Erfindung betrifft einen Sprachschalter für ein Gebäudeautomationssystem mit einer Übertragungsvorrichtung, einer Spannungsversorgungsvorrichtung und einer Spracherkennungsvorrichtung.

## Beschreibung

Die vorliegende Erfindung betrifft einen Sprachschalter für ein Gebäudeautomationssystem mit einer Übertragungsvorrichtung, einer Spannungsversorgungsvorrichtung und einer Spracherkennungsvorrichtung.

Sprachschalter für Gebäudeautomationssysteme sind aus dem Stand der Technik bekannt. So kann ein Hausbesitzer beispielsweise in einem Zimmer den Befehl "Licht an" aussprechen und eine Lichtquelle in dem Zimmer wird angeschaltet. Dabei müssen zuvor der Sprachschalter und das Gateway des Gebäudeautomationssystems auf den Sprachbefehl des Hausbesitzers trainiert werden.

Ferner erfordert ein Gebäudeautomationssystem üblicherweise einen erhöhten Aufwand, da eine Verkabelung aller Komponenten im ganzen Haus erfolgen muss. Insbesondere bei einer nachträglichen Installation eines solchen Systems entstehen somit hohe Kosten und Lärm- und Schmutzbelästigungen für die Bewohner.

Weiterhin sind aus dem Stand der Technik auch kabellose Gebäudeautomatisierungssysteme bekannt. Diese Systeme kommunizieren über Funkstandards wie beispielsweise ZigBee oder Z-Wave, benötigen dafür allerdings Energie, die im Regelfall über Batterien bereitgestellt wird.

Diesbezüglich schafft der EnOcean-Standard Abhilfe. Dieser ermöglicht unter anderem die Spannungsversorgung über Energiewandler. So reicht beispielsweise die durch das Betätigen eines physischen Schalter erzeugte Piezoelektrizität aus um ein Funksignal zu erzeugen, mit dem Informationen übertragen werden können um wiederum Komponenten zu steuern.

Durch den Verzicht auf eine Anbindung an das Stromnetz und den Verzicht auf den Einsatz von chemischen Energiespeichern wie Batterien wird ein wartungsarmes Gebäudeautomationssystem ermöglicht, welches auch nachträglich einfach und mit geringen Kosten implementierbar ist.

Nachteilig ist dabei allerdings, dass die EnOcean-Technologie keinen Sprachschalter vorsieht, so dass alle Komponenten des Gebäudeautomationssystems manuell direkt oder indirekt gesteuert werden müssen. Weiterhin ist es nachteilig, dass mit einem herkömmlichen Sprachschalter stets nur eine Komponente gesteuert werden kann.

Es war daher die Aufgabe der vorliegenden Erfindung, einen Sprachschalter für ein Gebäudeautomationssystem gemäß dem EnOcean-Standard zur Verfügung zu stellen, mit dem eine Mehrzahl von Komponenten gesteuert werden kann und der flexibel einsetzbar ist.

Gelöst wird die Aufgabe mit einem Sprachschalter für ein Gebäudeautomationssystem mit einer Übertragungsvorrichtung, einer Spannungsversorgungsvorrichtung und einer Spracherkennungsvorrichtung, wobei der Sprachschalter eine EnOcean-Schnittstelle aufweist.

Eine EnOcean-Schnittstelle ist insbesondere eine Schnittstelle, die nach dem internationalen Standard ISO/IEC 14543-3-10 arbeitet.

Hierdurch ist es in vorteilhafter Weise möglich, einen Sprachschalter zu realisieren, der nach dem EnOcean-Standard arbeitet und eine Vielzahl von Komponenten gleichzeitig ansteuern kann.

Unter Komponenten eines Gebäudeautomationssystems werden insbesondere Aktoren und Sensoren verstanden, wobei vorzugsweise die Sensoren Signale empfangen und an Aktoren weiterleiten, wobei vorzugsweise die Aktoren Aktionen daran gekoppelter Gebäudetechnik auslösen, beispielsweise Lichtquellen anschalten, ausschalten und/oder dimmen, Heizungsanlagen regulieren, Fensterverdunkelungen steuern und/oder Fenster öffnen und/oder schließen.

Besonders bevorzugt sollen unter Komponenten aber auch Vorrichtungen verstanden werden, die nicht direkt der Gebäudetechnik zuordenbar sind, beispielsweise Unterhaltungssysteme wie Musikanlagen und/oder Fernsehgeräte, Waschmaschinen, Kühlschränke, Öfen, Überwachungskameras und/oder sonstige elektronische Geräte.

Ganz besonders bevorzugt zählen zu den Komponenten auch Vorrichtungen außerhalb des Gebäudes, beispielsweise Pflanzenberieselungsanlagen, Garagentore und/oder Außenbeleuchtungen.

Der Fachmann versteht, dass Aktoren und Sensoren sowohl getrennt, als auch zusammen in einem Gerät vorliegen können. So ist der erfindungsgemäße Sprachschalter beispielsweise ein Sensor, da er über die Spracherkennungsvorrichtung einen Sprachbefehl entgegen nimmt, aber auch ein Aktor, insofern er einen durch die Spracherkennungsvorrichtung erkannten Befehl über die Übertragungsvorrichtung als Signal gemäß dem EnOcean-Standard versendet.

Vorzugsweise umfasst die Spracherkennungsvorrichtung wenigstens ein Mikrofon, sowie besonders bevorzugt wenigstens einen Verstärker.

Vorzugsweise umfasst die Spracherkennungsvorrichtung und/oder der Sprachschalter eine Speichervorrichtung, insbesondere eine Sprachbefehlsdatenbank.

Vorzugsweise umfasst die Spracherkennungsvorrichtung wenigstens eine Steuereinheit, die derart konfiguriert ist, dass sie den eingehenden Sprachbefehl analysiert und bei wenigstens hinreichender Übereinstimmung mit einem in einer Speichereinheit vorliegenden Sprachbefehl ein Signal an die Übertragungsvorrichtung übermittelt. Besonders bevorzugt ist die Speichereinheit die Speichervorrichtung.

Das Signal umfasst vorzugsweise eine Information, die mit dem Sprachbefehl wenigstens in Verbindung steht.

Vorzugsweise weist der Sprachschalter ferner eine Empfangsvorrichtung auf, die derart konfiguriert ist, einen Befehl zu empfangen und ein Signal, das eine Information umfasst, die mit dem Befehl wenigstens in Verbindung steht, an die Übertragungsvorrichtung und/oder an die Spracherkennungsvorrichtung weiterzuleiten. Hierdurch ist es in vorteilhafter Weise möglich, den Sprachschalter auch auf andere Weise als über einen Sprachbefehl zu steuern, beispielsweise über eine Fernsteuerungsvorrichtung, insbesondere über eine Fernbedienung und/oder ein Mobiltelefon.

Besonders bevorzugt ist die Empfangsvorrichtung derart ausgebildet, dass sie einen Sprachbefehl empfangen und ein entsprechendes Signal an die Spracherkennungsvorrichtung weiterleiten kann. Hierdurch ist es einem Benutzer vorteilhafterweise möglich, beispielsweise über einen Anruf den Sprachschalter zu bedienen, ohne sich physisch in der Nähe des Sprachschalters aufhalten zu müssen.

Vorzugsweise weist die Empfangsvorrichtung und/oder die Spracherkennungsvorrichtung Sicherheitsmittel auf, beispielsweise eine Codesperre.

Der Fachmann versteht, dass zusätzlich oder alternativ die Spracherkennung der Spracherkennungsvorrichtung als Sicherheitsmittel benutzbar ist. So ist es denkbar, dass beispielsweise die Spracherkennungsvorrichtung nur dann ein Signal an die Übertragungsvorrichtung übermittelt, wenn ein Befehl und/oder Sprachbefehl durch einen identifizierten und/oder autorisierten Benutzer erfolgt.

Vorzugsweise weist die Spracherkennungsvorrichtung ein semantisches Spracherkennungsmittel auf. Hierdurch ist es möglich, dass nicht nur ein wortwörtlicher Sprachbefehl erkannt und ein entsprechendes Signal von der Übertragungsvorrichtung übermittelt wird, sondern dass die Spracherkennungsvorrichtung Spracheingaben eines Benutzers hinsichtlich ihrer Semantik analysieren und Sprachbefehle extrahieren kann.

Somit ist es beispielsweise möglich, dass eine Spracheingabe wie "Komme heim" von der Spracherkennungsvorrichtung erkannt wird und ein entsprechendes Signal an die Übertragungsvorrichtung übermittelt, die wiederum Signale versendet, die der Einschaltung einer Beleuchtung oder mehrerer Beleuchtungen in mehreren Räumen und der Erhöhung der Heizleistung zur Heraufsetzung einer Raumtemperatur und dem Hochfahren von Rollläden und/oder Jalousien entsprechen.

Ebenso ist es vorstellbar, dass die Spracherkennungsvorrichtung beispielsweise die Spracheingabe "Ich habe Lust auf einen Film" erkennt, analysiert, und der Sprachschalter über die Übertragungsvorrichtung derartige Signale sendet, dass die Beleuchtung gedimmt wird, die Rollläden und/oder Jalousien sich schließen und ein Fernseher eingeschaltet wird.

Vorzugsweise weist der Sprachschalter eine weitere Schnittstelle auf. Besonders bevorzugt ist die weitere Schnittstelle eine kabellose Schnittstelle, insbesondere eine ZigBee-Schnittstelle, eine Z-Wave-Schnittstelle, eine WLAN-Schnittstelle und/oder eine Bluetooth-Schnittstelle. Unter einer WLAN-Schnittstelle soll insbesondere eine Schnittstelle verstanden werden, die nach dem IEEE-802.11-Standard arbeitet. In analoger Weise soll unter einer Bluetooth-Schnittstelle insbesondere eine Schnittstelle verstanden werden, die nach dem IEEE 802.15.1-Standard arbeitet. Hierdurch ist der erfindungsgemäße Sprachschalter vorteilhafterweise flexibel und vielseitig einsetzbar, ohne auf eine bestimmte Schnittstelle eingeschränkt zu sein.

Vorzugsweise ist die weitere Schnittstelle eine kabelgebundene Schnittstelle. So kann der erfindungsgemäße Sprachschalter vorteilhafterweise besonders flexibel eingesetzt und insbesondere in bereits bestehende Gebäudeautomationssysteme integriert werden.

Vorzugsweise umfasst die Spannungsversorgungsvorrichtung einen EnOcean-Energiewandler, insbesondere ein ECS300-Solarmodul und/oder ein ECS310- und/oder ein ECS310-Perpetuum-Energiewandler. Unter einem EnOcean-Energiewandler soll insbesondere ein Energiewandler verstanden sein, der nach dem EnOcean-Standard und/oder über eine EnOcean-Schnittstelle arbeitet.

Besonders bevorzugt ist die Spannungsversorgungsvorrichtung mit einer Hausstromleitung, insbesondere einer 230V-Leitung, und/oder einer Energiespeichervorrichtung, insbesondere einer Batterie, verbunden. Hierdurch ist es vorteilhafterweise möglich, sowohl einen autarken Sprachschalter zu realisieren als auch einen einfach aufgebauten, an ein bestehendes Stromnetz angeschlossenen Sprachschalter.

Der Fachmann versteht, dass als Energiespeichervorrichtung auch ein Akkumulator verwendbar ist. Ebenso versteht der Fachmann, dass die Spannungsversorgungsvorrichtung zusätzlich oder alternativ auch einen anderen als die genannten Energiewandler umfassen kann. Beispielsweise umfasst die Spannungsversorgungsvorrichtung einen Energiewandler, der die mit den Sprache vermittelnden Schallwellen einhergehenden Druck- und/oder Temperaturschwankungen nutzt, um dem Sprachschalter Energie zur Verfügung zu stellen. Insbesondere umfasst ein solcher Energiewandler wenigstens eine hochsensible Membran.

Zusätzlich oder alternativ ist die Spannungsversorgungsvorrichtung, und insbesondere der Energiewandler, direkt mit der Spracherkennungsvorrichtung verbunden, beispielsweise über eine gemeinsame Membran, die einerseits Teil eines Mikrofons und andererseits Teil eines Energiewandlers ist.

Vorzugsweise umfasst die Übertragungsvorrichtung ein EnOcean-Funkmodul, insbesondere ein STM300-Funkmodul. Unter einem EnOcean-Funkmodul soll insbesondere ein Funkmodul verstanden sein, das nach dem EnOcean-Standard und/oder über eine EnOcean-Schnittstelle arbeitet. Ein solches Funkmodul kann vorzugsweise Signale bis zu 300m weit übertragen, besonders bevorzugt innerhalb von Gebäuden bis zu 50m, insbesondere bis zu 30m.

Vorzugsweise umfasst die Übertragungsvorrichtung wenigstens noch ein weiteres Funkmodul, welches nicht nach dem EnOcean-Standard arbeitet. Hierdurch ist es in vorteilhafter Weise möglich, dass der Sprachschalter sowohl in ein bestehendes Gebäudeautomationssystem integrierbar ist, als auch in einem neuen System, welches nach einem anderen Standard als das bestehende System arbeitet, verwendbar ist. Dies erhöht die Vielseitigkeit des erfindungsgemäßen Sprachschalters.

Vorzugsweise ist die Spracherkennungsvorrichtung anlernbar. Besonders bevorzugt sind erlernte Sprachbefehle in der Speichervorrichtung, insbesondere in der Sprachbefehlsdatenbank, gespeichert. Besonders bevorzugt ist die Spracherkennungsvorrichtung derart konfiguriert, dass Sprachbefehle von der Spracherkennungsvorrichtung erkannt werden, mit den in der Sprachbefehlsdatenbank gespeicherten Sprachbefehlen verglichen werden und im Falle einer positiven Erkennung ein in der Sprachbefehlsdatenbank gespeichertes und dem erkannten Sprachbefehl zugeordnetes Signal an die Übertragungsvorrichtung übermittelt wird.

Vorzugsweise ist durch den Sprachschalter wenigstens eine Komponente des Gebäudeautomationssystems steuerbar.

Besonders bevorzugt sind durch den Sprachschalter wenigstens zwei unterschiedliche Komponenten steuerbar.

Ganz besonders bevorzugt umfasst die wenigstens eine steuerbare Komponente eine Heizungssteuerung, eine Lichtsteuerung, eine Rollladen- und/oder Jalousien- und/oder Fenstersteuerung, eine Klimasteuerung und/oder eine Musiksteuerung.

Noch mehr bevorzugt ist durch den Sprachschalter wenigstens eine Komponente des Gebäudeautomationssystems in wenigstens einem Raum steuerbar. Insbesondere sind mehrere Komponenten in unterschiedlichen Räumen steuerbar, vorzugsweise durch einen gemeinsamen Sprachbefehl. Hierdurch ist es vorteilhafterweise möglich, dass der erfindungsgemäße Sprachschalter vielfältig konfigurierbar ist, also ein Benutzer den Sprachschalter für eine beliebige Anzahl von beliebigen Befehlskombinationen für die steuerbaren Komponenten anlernen kann. So kann beispielsweise mit einem Sprachbefehl eine Lichtquelle in dem Raum, in dem sich der Benutzer und/oder der Sprachschalter befindet, gesteuert werden, oder es können mit einem Sprachbefehl mehrere Lichtquellen und weitere Komponenten in unterschiedlichen Räumen gesteuert werden.

Vorzugsweise ist das Signal, welches von der Übertragungsvorrichtung zu den Komponenten gesendet wird, verschlüsselt. Hierdurch wird in vorteilhafter Weise die Sicherheit des Sprachschalters erhöht.

Die Merkmale der bevorzugten Ausführungsformen, welche im Zusammenhang mit diesem erfindungsgemäßen Gegenstand offenbart worden sind, gelten auch für alle übrigen erfindungsgemäßen Gegenstände und umgekehrt.

Ein weiterer Gegenstand der vorliegenden Erfindung ist ein Gebäudeautomationssystem, das wenigstens einen erfindungsgemäßen Sprachschalter umfasst. Ein solches Gebäudeautomationssystem ist vorteilhafterweise besonders flexibel konfigurierbar und einsetzbar und kann mit geringen Kosten und ohne Aufwand auch nachträglich in bestehenden Gebäude installiert werden.

Vorzugsweise sind Komponenten des Gebäudeautomationssystems derart konfiguriert, dass sie nach Empfang eines Signals durch den Sprachschalter ein Bestätigungssignal an den Sprachschalter senden, wobei das Bestätigungssignal wenigstens eine Information darüber umfasst, dass das Signal von der bestimmungsgemäßen Komponente empfangen und/oder umgesetzt worden ist.

Vorzugsweise erfolgt die Kommunikation der einzelnen Komponenten des Gebäudeautomationssystems über das Routing-Prinzip. Darunter soll verstanden werden, dass ein Signal für eine bestimmte Komponente über weitere Komponenten weitergeleitet wird. Hierdurch ist es in vorteilhafter Weise möglich, dass der Sprachschalter auch Komponenten steuern kann, die außerhalb der Reichweite des Sprachschalters, insbesondere der Übertragungsvorrichtung, angeordnet sind.

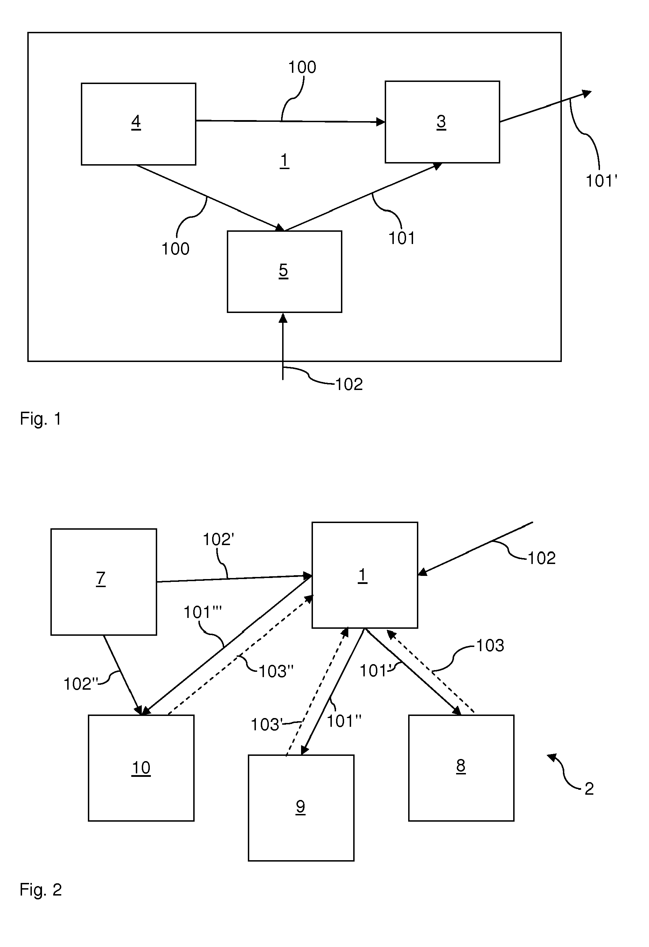

Im Folgenden wird die Erfindung anhand der Figuren 1 und 2 erläutert. Diese Erläuterungen sind lediglich beispielhaft und schränken den allgemeinen Erfindungsgedanken nicht ein.
- **Figur 1**: zeigt eine beispielhafte Ausführungsform eines erfindungsgemäßen Sprachschalters.
- **Figur 2**: zeigt eine beispielhafte Ausführungsform eines erfindungsgemäßen Gebäudeautomationssystems.

In **Figur 1** ist eine beispielhafte Ausführungsform eines erfindungsgemäßen Sprachschalters 1 dargestellt. Der Sprachschalter 1 ist für ein Gebäudeautomationssystem 2 vorgesehen und umfasst eine Spannungsversorgungsvorrichtung 4, eine Übertragungsvorrichtung 3 und eine Spracherkennungsvorrichtung 4.

Der Sprachschalter 1 ist beispielsweise in ein Gehäuse integriert, welches jede beliebige Form annehmen kann. Alternativ ist der Sprachschalter 1 nicht sichtbar angeordnet, beispielsweise hinter einer Wandverkleidung.

Erfindungsgemäß weist der Sprachschalter 1 eine EnOcean-Schnittstelle auf, d.h., er kommuniziert mit anderen Komponenten des Gebäudeautomationssystems 2 über den EnOcean-Standard. Gemäß der hier dargestellten Ausführungsform handelt es sich bei der Spannungsversorgungseinrichtung 4 um einen EnOcean-Energiewandler. Zusätzlich oder alternativ ist die Spannungsversorgungseinrichtung 4 an das Stromnetz des Gebäudes angeschlossen. Die Spannungsversorgungseinrichtung 4 versorgt die Spracherkennungsvorrichtung 5 und die Übertragungsvorrichtung 3 mit einem Spannungssignal 100.

Bei der Spracherkennungsvorrichtung 5 handelt es sich beispielsweise um ein kommerziell erhältliches Modul, insbesondere um eine speicherprogrammierbare Steuerung. Diese empfängt einen Sprachbefehl 102 oder einen Befehl 102', vergleicht ihn mit in einer mit der Spracherkennungsvorrichtung 5 verbundenen Sprachbefehlsdatenbank bzw. Speichervorrichtung 6 gespeicherten Sprachbefehlen 102. Falls der Sprachbefehl 102 bzw. Befehl 102' erkannt wird, sendet die Spracherkennungsvorrichtung 5 wenigstens ein Signal 101 an die Übertragungsvorrichtung 3. Dieses Signal 101 entspricht einem dem Sprachbefehl 102 in der Sprachbefehlsdatenbank 6 zugeordneten Signal 101.

Die Sprachbefehlsdatenbank 6 kann von Werk aus mit einem Mindestsatz an Sprachbefehlen 102 versehen sein, alternativ oder zusätzlich ist der Sprachschalter 1 auch anlernbar. Das bedeutet, dass ein Benutzer beliebige und/oder vorgegebene Sprachbefehle 102 in der Sprachbefehlsdatenbank 6 speichern kann und sie mit beliebigen oder modular wählbaren Folgen verknüpfen kann, insbesondere entsprechen die Folgen dabei Signalen 101, die an die Komponenten des Gebäudeautomationssystems 2 in Form von weiteren Signalen 101', 101 ", 101"' übertragen werden und bestimmte Aktionen auslösen.

Beispielsweise ist dem Sprachbefehl 102 "Licht an" ein Signal 101 zugeordnet, dass an die Übertragungsvorrichtung 3 übertragen wird und von dort als weiteres Signal 101' an eine Lichtquelle 8 übertragen wird, die bei Empfang des Signals 101' eingeschaltet wird.

Gemäß einem weiteren Beispiel kann der Sprachbefehl 102 "Licht an" wahlweise auch dazu führen, dass mehrere weitere Signale 101', 101" an mehrere Lichtquellen einer Beleuchtung 8 übermittelt werden, wobei jede Lichtquelle 8 bei Empfang des entsprechenden Signals 101', 101" eingeschaltet wird.

Dabei ist der Sprachschalter 1 nicht auf die genannten Beispiele beschränkt, sondern kann entsprechend der vorhandenen Komponenten beliebig kombiniert und erweitert werden, insbesondere sind mit einem Sprachbefehl 102 eine beliebige Anzahl von Komponenten in einer beliebigen Anzahl von Räumen in beliebiger Kombination steuerbar. So können beispielsweise Lichtquellen 8 und Heizungen 9 kombiniert mit einem Sprachbefehl 102 gesteuert werden.

Die Übertragungsvorrichtung 3 empfängt das Signal 101 der Spracherkennungsvorrichtung 5 und versendet wenigstens ein entsprechendes Signal 101' an wenigstens eine Komponente.

Die Übertragungsvorrichtung 3 ist hier beispielsweise ein EnOcean-Funkmodul und versendet die Signale 101' entsprechend dem EnOcean-Standard, vorzugsweise verschlüsselt.

In **Figur 2** ist eine beispielhafte Ausführungsform eines erfindungsgemäßen Gebäudeautomationssystems 2 dargestellt.

Das Gebäudeautomationssystem 2 umfasst wenigstens einen erfindungsgemäßen Sprachschalter 1. Gemäß der dargestellten Ausführungsform ist der Sprachschalter 1 derart konfiguriert, dass er Sprachbefehle 102 empfangen oder verarbeiten kann, aber ebenso durch eine Fernsteuerungsvorrichtung 7 über Befehle 102' steuerbar ist. Eine solche Fernsteuerungsvorrichtung 7 ist beispielsweise ein modernes Mobiltelefon, ein sogenanntes Smartphone. Denkbar ist, dass beispielsweise nach einer anfänglichen Paarung bzw. Kopplung und/oder nach Eingabe eines Codes die volle Funktionalität des Sprachschalters 1 auch über eine graphische Benutzeroberfläche des Smartphones steuerbar ist.

Ebenso ist denkbar, dass der Sprachschalter 1 beispielsweise mit Hilfe einer graphischen Benutzeroberfläche über das Smartphone anlernbar ist.

Gemäß der dargestellten Ausführungsform umfasst das Gebäudeautomationssystem 2 weiterhin eine Beleuchtung 8, eine Heizung 9 und eine Fenstersteuerung 10. Jede dieser Komponenten ist mit Aktoren ausgestattet, die gemäß dem EnOcean-Standard arbeiten und die genannten Komponenten steuern können.

So ist beispielsweise die Beleuchtung 8 anschaltbar, ausschaltbar und/oder dimmbar, die Heizung 9 ist auf beliebige Temperaturen regulierbar und die Fenstersteuerung 10 kann beispielsweise Jalousien oder Rollläden herablassen oder öffnen, oder ein Fenster öffnen oder schließen. Jede dieser Aktionen wird jeweils über ein Signal 101', 101 ", 101'" bewirkt, wobei durch ein Signal 101' beispielsweise auch mehrere Beleuchtungen 8, beziehungsweise mehrere Lichtquellen einer Beleuchtung 8, steuerbar sind.

Hat eine Komponente das ihr zugeordnete Signal 101', 101 ", 101'" empfangen, sendet es vorzugsweise ein Bestätigungssignal 103, 103', 103" zurück an den Sprachschalter 1, so dass beispielsweise Fehler in dem Gebäudeautomationssystem 2 einfach gefunden und behoben werden können.

Weiterhin ist es gemäß der dargestellten Ausführungsform alternativ oder zusätzlich möglich, mit der Fernsteuerungsvorrichtung 7 wenigstens eine der Komponenten, hier beispielsweise die Fenstersteuerung 10, über einen Befehl 102" direkt zu steuern.

Ein weiterer erfindungsgemäßer Aspekt des Gebäudeautomationssystems 2 besteht darin, dass ein Signal 101' über beliebige Komponenten weiterleitbar ist, falls beispielsweise die Zielkomponente außerhalb der Funkreichweite des Sprachschalters 1 liegt.

### Bezugszeichenliste

- 1: Sprachschalter
- 2: Gebäudeautomationssystem
- 3: Übertragungsvorrichtung
- 4: Spannungsversorgungsvorrichtung
- 5: Spracherkennungsvorrichtung
- 6: Speichervorrichtung
- 7: Fernsteuerungsvorrichtung
- 8: Beleuchtung
- 9: Heizung
- 10: Fenstersteuerung

- 100: Spannungssignal
- 101, 101', 101", 101'": Signal
- 102, 102', 102": Sprachbefehl/Befehl
- 103, 103', 103": Bestätigungssignal

## Patentansprüche

1. Sprachschalter (1) für ein Gebäudeautomationssystem (2) mit einer Übertragungsvorrichtung (3), einer Spannungsversorgungsvorrichtung (4) und einer Spracherkennungsvorrichtung (5), **dadurch gekennzeichnet, dass** der Sprachschalter eine EnOcean-Schnittstelle aufweist.

2. Sprachschalter (1) nach Anspruch 1, **dadurch gekennzeichnet, dass** der Sprachschalter (1) eine weitere Schnittstelle aufweist.

3. Sprachschalter (1) nach Anspruch 2, **dadurch gekennzeichnet, dass** die weitere Schnittstelle eine kabellose Schnittstelle ist, insbesondere eine ZigBee-Schnittstelle, eine Z-Wave-Schnittstelle, eine WLAN-Schnittstelle und/oder eine Bluetooth-Schnittstelle, und/oder **dadurch gekennzeichnet, dass** die weitere Schnittstelle eine kabelgebundene Schnittstelle ist.

4. Sprachschalter (1) nach einem der vorhergehenden Ansprüche, **dadurch gekennzeichnet, dass** die Spannungsversorgungsvorrichtung (4) einen EnOcean-Energiewandler umfasst, insbesondere ein ECS300-Solarmodul und/oder ein ECS310- und/oder ein ECS310-Perpetuum-Energiewandler, und/oder **dadurch gekennzeichnet, dass** die Spannungsversorgungsvorrichtung (4) mit einer Hausstromleitung, insbesondere einer 230V-Leitung, und/oder einer Energiespeichervorrichtung, insbesondere einer Batterie, verbunden ist.

5. Sprachschalter (1) nach einem der vorhergehenden Ansprüche, **dadurch gekennzeichnet, dass** die Übertragungsvorrichtung (3) ein EnOcean-Funkmodul umfasst, insbesondere ein STM300-Funkmodul.

6. Sprachschalter (1) nach einem der vorhergehenden Ansprüche, **dadurch gekennzeichnet, dass** die Spracherkennungsvorrichtung (5) anlernbar ist.

7. Sprachschalter (1) nach einem der vorhergehenden Ansprüche, **dadurch gekennzeichnet, dass** durch den Sprachschalter (1) wenigstens eine Komponente des Gebäudeautomationssystems (2) steuerbar ist.

8. Sprachschalter (1) nach Anspruch 7, **dadurch gekennzeichnet, dass** durch den Sprachschalter (1) wenigstens zwei unterschiedliche Komponenten steuerbar sind.

9. Sprachschalter (1) nach einem der Ansprüche 7 oder 8, **dadurch gekennzeichnet, dass** die wenigstens eine Komponente eine Heizungssteuerung, eine Lichtsteuerung, eine Rollladen- und/oder Jalousien- und/oder Fenstersteuerung, eine Klimasteuerung und/oder eine Musiksteuerung umfasst.

10. Sprachschalter (1) nach einem der vorhergehenden Ansprüche, **dadurch gekennzeichnet, dass** durch den Sprachschalter (1) wenigstens eine Komponente des Gebäudeautomationssystems (2) in wenigstens einem Raum steuerbar ist.

11. Sprachschalter (1) nach einem der vorhergehenden Ansprüche, **dadurch gekennzeichnet, dass** die Spracherkennungsvorrichtung (5) eine Speichervorrichtung (6) umfasst, insbesondere eine Sprachbefehlsdatenbank.

12. Sprachschalter (1) nach einem der vorhergehenden Ansprüche, **dadurch gekennzeichnet, dass** der Sprachschalter (1) ferner eine Empfangsvorrichtung umfasst.

13. Sprachschalter (1) nach einem der vorhergehenden Ansprüche, **dadurch gekennzeichnet, dass** die Empfangsvorrichtung und/oder die Spracherkennungsvorrichtung (5) Sicherheitsmittel aufweist.

14. Sprachschalter (1) nach einem der vorhergehenden Ansprüche, **dadurch gekennzeichnet, dass** die Spracherkennungsvorrichtung (5) ein semantisches Spracherkennungsmittel aufweist.

15. Gebäudeautomationssystem (2), **dadurch gekennzeichnet, dass** es wenigstens einen Sprachschalter nach einem der vorherigen Ansprüche umfasst.
